# EUROPÄISCHE PATENTANMELDUNG

(11) **EP 4 465 309 A1**
(43) Veröffentlichungstag der Anmeldung: **20.11.2024**
(21) Anmeldenummer: 24176626.0
(22) Anmeldetag: 17.05.2024
(51) Int. Cl.: H01B 7/00, B60R 16/02, H01B 13/012

(54) **VERFAHREN ZUR HERSTELLUNG EINER FORM UND FORM ZUR HERSTELLUNG EINES KABELBAUMS**

(30) Priorität: 19.05.2023 DE 102023113207
(71) Anmelder: Yazaki Systems Technologies GmbH, 93059 Regensburg (DE)
(72) Erfinder: de la Fuente, René, 93049 Regensburg (DE); Frank, Lennart, 93059 Regensburg (DE)
(74) Vertreter: Patentanwaltskanzlei WILHELM & BECK

(57) **Zusammenfassung**

Die Erfindung betrifft ein Verfahren zur Herstellung einer Form und eine Form zur Herstellung eines Kabelbaums, wobei ein sich entlang einer ersten Erstreckungslinie (55) erstreckender erster Hohlkörper (195) aus einem dünnwandigen zweiten Werkstoff bereitgestellt wird, wobei der erste Hohlkörper (195) entlang der ersten Erstreckungslinie (55) in eine erste Halbschale (40) aufgeteilt, insbesondere halbiert, wird, wobei die erste Halbschale (40) innenseitig einen ersten Formraumabschnitt (80) eines Formraums (85) der Form (10) zur Herstellung des Kabelbaums (15) begrenzt.

## Beschreibung

Die Patentanmeldung beansprucht die Priorität der deutschen Patentanmeldung 10 2023 113 207.5, deren Offenbarungsgehalt hiermit durch Rückbezug aufgenommen wird.

Die Erfindung betrifft ein Verfahren zur Herstellung einer Form gemäß Patentanspruch 1 und eine Form zur Herstellung eines Kabelbaums gemäß Anspruch 9.

Aus der DE 10 2016 108 522 A1 ist eine Form zur Herstellung eines Kabelbaums bekannt. Die Form weist ein U-förmiges Profil mit dicker Wandstärke auf.

Es ist Aufgabe der Erfindung, ein verbessertes Verfahren zur Herstellung einer Form und eine verbesserte Form zur Herstellung eines Kabelbaums bereitzustellen.

Diese Aufgabe wird mittels eines Verfahrens gemäß Patentanspruch 1 und einer Form gemäß Patentanspruch 9 gelöst. Vorteilhafte Ausführungsformen sind in den abhängigen Ansprüchen angegeben.

Es wurde erkannt, dass ein verbessertes Verfahren zur Herstellung einer Form zur Herstellung eines Kabelbaums dadurch bereitgestellt werden kann, dass ein sich entlang einer ersten Erstreckungslinie erstreckender erster Hohlkörper aus einem, vorzugsweise dünnwandigen, zweiten Werkstoff bereitgestellt wird. Der erste Hohlkörper wird entlang der ersten Erstreckungslinie in eine erste Halbschale aufgeteilt, insbesondere halbiert. Die erste Halbschale begrenzt innenseitig einen ersten Formraumabschnitt eines Formraums der Form zur Herstellung des Kabelbaums.

Diese Ausgestaltung hat den Vorteil, dass aus Hohlkörpern, insbesondere aus Standardprofilen, die erste Halbschale kostengünstig hergestellt werden kann. Insbesondere kann der Hohlkörper beispielsweise aus Rohren oder Rechteckprofilen hergestellt werden. Das Aufteilen in die erste Halbschale hat den Vorteil, dass aus dem Hohlkörper jeweils zwei erste Halbschalen hergestellt werden, sodass der Materialaufwand an dem zweiten Werkstoff zur Herstellung der Form besonders gering ist. Ferner sind die Herstellungskosten für die Herstellung der Form besonders gering, da für den ersten Hohlkörper Standardprofile genutzt werden können. Ferner kann das Herstellungsverfahren zur Herstellung der Form zumindest teilautomatisiert, insbesondere vollautomatisiert, ablaufen.

In einer weiteren Ausführungsform wird ein sich entlang einer zweiten Erstreckungslinie erstreckender zweiter Hohlkörper aus einem dritten Werkstoff bereitgestellt. Der zweite Hohlkörper wird entlang der zweiten Erstreckungslinie in eine zweite Halbschale aufgeteilt, insbesondere halbiert. Die zweite Halbschale begrenzt innenseitig einen zweiten Formraumabschnitt des Formraums. Die erste Halbschale wird direkt oder indirekt mit der zweiten Halbschale zu der Form derart verbunden, dass der erste Formraumabschnitt mit dem zweiten Formabschnitt verbunden ist. Diese Ausgestaltung hat den Vorteil, dass komplizierte Geometrien der Form mittels zweier Halbschalen hergestellt werden können.

Besonders einfach und kostengünstig kann der erste Hohlkörper mit dem zweiten Hohlkörper, insbesondere stoffschlüssig, zu einer Rohform verbunden werden, wobei die Rohform zeitlich nach Verbinden des ersten Hohlkörpers mit dem zweiten Hohlkörper entlang der ersten und zweiten Erstreckungslinie zu der Form und gegebenenfalls einer weiteren Form zerteilt, insbesondere halbiert, wird. Diese Ausgestaltung hat den Vorteil, dass der Hohlkörper und der weitere Hohlkörper in einem einzigen Verfahrensschritt miteinander verbunden werden. Beim Zerteilen kann, insbesondere wenn die Rohform halbiert wird, zusätzlich eine weitere Form hergestellt werden, die ebenso wie die Form zur Herstellung des Kabelbaums ausgebildet ist.

In einer weiteren Ausführungsform wird zeitlich vor Verbinden des ersten Hohlkörpers mit dem zweiten Hohlkörper der erste Hohlkörper in die erste Halbschale und der zweite Hohlkörper in die zweite Halbschale zerteilt, insbesondere halbiert. Diese Ausgestaltung hat den Vorteil, dass die beiden Halbschalen definiert zueinander ausgerichtet werden können.

In einer weiteren Ausführungsform wird die erste Halbschale und/oder die zweite Halbschale mittels eines Befestigungsmittels formschlüssig und/oder stoffschlüssig an einem zumindest abschnittsweise plattenförmigen Formbrett der Form befestigt. Diese Ausgestaltung stellt sich, dass ein Verkippen der Halbschalen zueinander oder beim Einlegen der Kabel in den Formraum vermieden werden kann.

In einer weiteren Ausführungsform wird der erste Hohlkörper und/oder die erste Halbschale verformt, insbesondere gebogen, insbesondere kaltverformt. Diese Ausgestaltung hat den Vorteil, dass der Formraum durch Verbiegen der Halbschale und/oder des ersten Hohlkörpers definiert an den gewünschten Verlauf des Kabelbaums einfach angepasst werden kann.

In einer weiteren Ausführungsform wird in die erste Halbschale eine Öffnung eingebracht, insbesondere gebohrt. An der Öffnung wird die zweite Halbschale angeordnet und mit dem zweiten Werkstoff verbunden, insbesondere besondere stoffschlüssig verbunden.

In einer weiteren Ausführungsform wird der erste Hohlkörper aus dem zweiten Werkstoff, insbesondere mittels eines Blasformverfahrens, extrudiert. Diese Ausgestaltung hat den Vorteil, dass der erste Hohlkörper besonders einfach und kostengünstig, beispielsweise rohrartig, hergestellt werden kann.

Es wurde erkannt, dass eine verbesserte Form zur Herstellung eines Kabelbaums dadurch bereitgestellt werden kann, dass die Form , die vorzugsweise mit dem oben beschriebenen Verfahren hergestellt wird, eine erste Halbschale aufweist. Die erste Halbschale ist vorzugsweise dünnwandig ausgebildet. Die erste Halbschale begrenzt mit einer ersten Innenseite einen ersten Formraumabschnitt eines Formraums zur Herstellung des Kabelbaums.

Diese Ausgestaltung hat den Vorteil, dass die Form besonders leicht ist und dadurch besonders gut innerhalb der Fertigung des Kabelbaums transportiert werden kann.

In einer weiteren Ausführungsform weist die Form eine zweite dünnwandig ausgebildete Halbschale auf, wobei die erste Halbschale eine Öffnung aufweist, wobei die zweite Halbschale begrenzt mit einer zweiten Innenseite einen zweiten Formraumabschnitt des Formraums. An der Öffnung sind die erste Halbschale und die zweite Halbschale derart miteinander verbunden, dass der erste Formraumabschnitt und der zweite Formraumabschnitt ineinander münden und den Formraum ausbilden. Diese Ausgestaltung hat den Vorteil, dass die Form auch eine komplizierte Geometrie aufweisen kann und diese mittels mehrerer Halbschalen hergestellt werden kann. Insbesondere können auch mit den Halbschalen, wenn diese geometrisch unterschiedlich ausgebildet sind, unterschiedliche Innenraumquerschnitte ausgebildet werden.

Die erste Halbschale und/oder die zweite Halbschale ist mittels eines Befestigungsmittels mit einem Formbrett der Form verbunden. Diese Ausgestaltung hat den Vorteil, dass ein ungewolltes Verkippen der Halbschalen zueinander, oder, wenn sie miteinander verbunden sind, vermieden wird, sodass ein ungewolltes Austreten eines Werkstoffs / einer Flüssigkeit später bei Herstellung des Kabelbaums, insbesondere wenn ein flüssiger Werkstoff zum Ummanteln der in den Formraum eingelegten Kabel eingebracht wird, verhindert wird.

In einer weiteren Ausführungsform weist die erste Halbschale und/oder die zweite Halbschale einen teilringförmigen, insbesondere einen halbringförmigen, oder einen U-förmigen Querschnitt auf. Der U-förmige Querschnitt kann besonders einfach aus einem rechteckförmigen Profil des Hohlkörpers hergestellt werden. Der halbringförmige Querschnitt kann besonders einfach aus zylinderförmigen Hohlkörpern hergestellt werden.

Besonders einfach und kostengünstig kann die erste Halbschale mittels einer stoffschlüssigen Verbindung, insbesondere einer Klebverbindung oder einer Schweißverbindung mit der zweiten Halbschale verbunden sein.

In einer weiteren Ausführungsform ist die erste Halbschale kaltverformt. Diese Ausgestaltung hat den Vorteil, dass die erste Halbschale besonders einfach und kostengünstig an die gewünschte Form zur Herstellung des Kabelbaums in ihrer geometrischen Ausgestaltung angepasst werden kann.

In einer weiteren Ausführungsform weist die erste Halbschale wenigstens eine erste Trennfläche und eine erste Einlegeöffnung auf. Die erste Einlegeöffnung mündet in dem ersten Formraumabschnitt und die erste Trennfläche grenzt an die erste Einlegeöffnung an. Die zweite Halbschale weist wenigstens eine dritte Trennfläche und eine zweite Einlegeöffnung auf, wobei die zweite Einlegeöffnung in den zweiten Formraumabschnitt mündet und die dritte Trennfläche an die zweite Einlegeöffnung angrenzt. Die erste Trennfläche und die dritte Trennfläche sind in einer gemeinsamen Ebene angeordnet. Diese Ausgestaltung hat den Vorteil, dass ein ungewolltes Ablaufen über eine zu niedrig angeordnete Trennfläche von flüssigem Werkstoff, der in der Herstellung des Kabelbaums in den Formraum eingebracht wird, vermieden werden kann.

In einer weiteren Ausführungsform weist die erste Halbschale wenigstens einen der folgenden zweiten Werkstoffe auf: Polyethylen, Polypropylen, Polyvinylchlorid. Zusätzlich oder alternativ weist die erste Halbschale und/oder die zweite Halbschale eine Materialstärke von einschließlich 1,5 mm bis einschließlich 4 mm, insbesondere von einschließlich 1,8 mm bis einschließlich 3,2 mm auf. Zusätzlich oder alternativ können die erste Halbschale und die zweite Halbschale einstückig und materialeinheitlich ausgebildet sein.

Nachfolgend wird die Erfindung anhand von Figuren näher erläutert. Dabei zeigen:
- Figur 1: eine perspektivische Darstellung einer Form zur Herstellung eines Kabelbaums gemäß einer ersten Ausführungsform,
- Figur 2: eine Schnittansicht entlang einer in Figur 1 gezeigten Schnittebene A-A durch die Form,
- Figur 3: eine Schnittansicht entlang einer in Figur 1 gezeigten Schnittebene B-B durch die Form,
- Figur 4: eine Draufsicht auf die in Figur 1 gezeigte Form,
- Figur 5: eine Schnittansicht entlang einer in Figur 4 gezeigten Schnittebene C-C durch die dritte Halbschale,
- Figur 6: eine Seitenansicht auf die in Figur 1 gezeigte Form,
- Figur 7: ein Ablaufdiagramm eines Verfahrens zur Herstellung der in den Figuren 1 bis gezeigten Form,
- Figur 8: eine schematische Darstellung einer Rohform nach dem vierten Verfahrensschritt und
- Figur 9: eine perspektivische Darstellung einer Form gemäß einer zweiten Ausführungsform.

In den nachfolgenden Figuren wird auf ein Koordinatensystem zum erleichterten Verständnis Bezug genommen. Das Koordinatensystem ist beispielhaft als Rechtssystem ausgebildet und weist eine x-Achse (Längsrichtung), eine y-Achse (Querrichtung) und eine z-Achse (Höhenrichtung) auf.

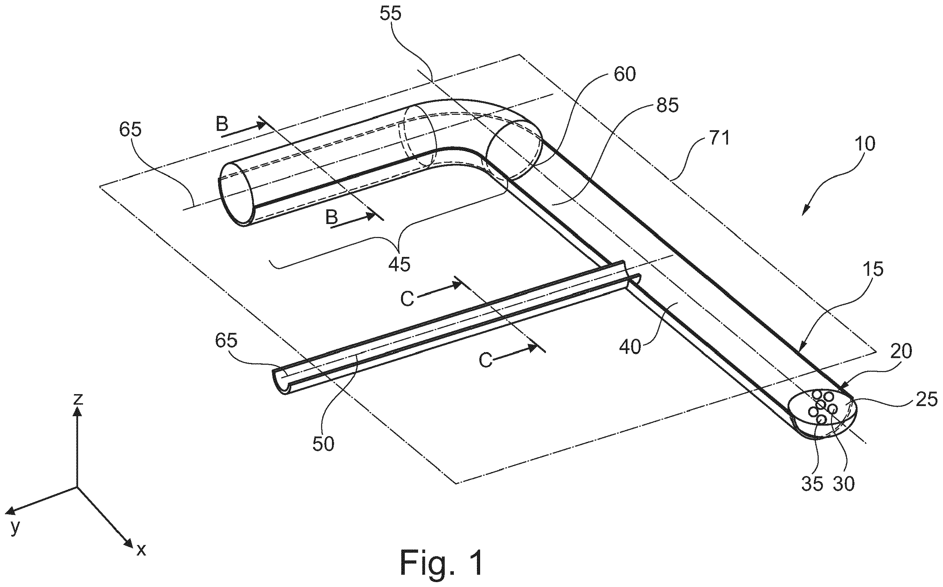

Figur 1 zeigt eine perspektivische Darstellung einer Form 10 zur Herstellung eines Kabelbaums 15.

Der Kabelbaum 15 ist in Figur 1 schematisch dargestellt. Der Kabelbaum 15 weist ein Kabelbündel 20 und eine Ummantelung 25 auf. Das Kabelbündel 20 weist mehrere elektrische Kabel 30, 35 auf. Die elektrischen Kabel 30, 35 können identisch oder unterschiedlich zueinander ausgebildet sein. Das Kabelbündel 20, insbesondere die elektrischen Kabel 30, 35 sind in der Ummantelung 25 eingebettet. Die Ummantelung 25 umschließt die elektrischen Kabel 30, 35, vorzugsweise vollständig, sodass dadurch vorzugsweise jedes der elektrischen Kabel 30, 35 in der Ummantelung 25 eingebettet ist.

Die Ummantelung 25 weist vorzugsweise einen Schaumwerkstoff auf, der umfangsseitig das Kabelbündel 20, vorzugsweise vollständig, umschließt. Der Schaumwerkstoff weist wenigstens einen der folgenden ersten Werkstoffe auf: Polyurethan, Silikon, offenporigen Schaum, geschlossenporigen Schaum, gemischtporigen Schaum, Polymer, Polymer-Filler-Matrix. Durch die Ummantelung 25 ist das elektrische Kabel 30, 35 mechanisch vor einer Beschädigung geschützt. Ferner verbindet die Ummantelung 25 stoffschlüssig die elektrischen Kabel 30, 35. Durch das Einbetten der elektrischen Kabel 30, 35 in die Ummantelung 25 wird ferner eine sichere Positionierung der elektrischen Kabel 30, 35 in dem Kabelbündel 20 sichergestellt. Zusätzlich kann ein Routerclip (in Figur 1 nicht dargestellt) oder eine Anordnung von Routerclips zumindest abschnittsweise in die Ummantelung 25 eingebettet sein, um den Kabelbaum 15 an Fahrzeugkomponenten, beispielsweise einer Fahrzeugkarosserie eines Fahrzeugs, mechanisch zu befestigen. Zusätzlich kann der Routerclip während der Herstellung des Kabelbaums 15 dazu dienen, die noch nicht in der Ummantelung 25 eingebetteten elektrischen Kabel 30, 35 in ihrer Position in der Form 10 zu positionieren.

Der Kabelbaum 15 kann beispielsweise zur Übertragung von elektrischen Signalen im Rahmen einer Datenübertragung oder zur Übertragung von elektrischer Energie zum Antrieb einer elektrischen Komponente des Fahrzeugs ausgebildet sein. Dazu weist das elektrische Kabel 30, 35 jeweils einen elektrischen Leiter und eine Kabelummantelung auf, wobei die Kabelummantelung den elektrischen Leiter elektrisch isoliert und umfangsseitig umschließt. Der elektrische Leiter ist ausgebildet, jeweils das elektrische Signal oder die elektrische Energie zu übertragen. Die Kabelummantelung jedes elektrischen Kabels 30, 35 ist über die Ummantelung 25 mechanisch mit der anderen Kabelummantelung des anderen elektrischen Kabels 30, 35 mechanisch verbunden.

Die Form 10 weist wenigstens eine erste Halbschale 40 auf. Zusätzlich zu der ersten Halbschale 40 kann die Form 10 eine zweite Halbschale 45 und/oder eine dritte Halbschale 50 aufweisen. Die erste Halbschale 40 erstreckt sich geradlinig beispielhaft entlang einer ersten Erstreckungslinie 55, die sich beispielsweise entlang einer Geraden parallel zur x-Achse erstreckt. Selbstverständlich wäre auch möglich, dass die erste Erstreckungslinie 55 und somit auch die erste Halbschale 40 bogenförmig ausgebildet ist. Die erste Halbschale 45 und vorzugsweise die zweite und dritte Halbschale 50, 55 begrenzen gemeinsam einen Formraum 85. In dem Formraum 85 ist der Kabelbaum 15 angeordnet.

Die zweite Halbschale 45 erstreckt sich entlang einer zweiten Erstreckungslinie 65, wobei die zweite Erstreckungslinie 65 L-förmig verläuft. Die zweite Halbschale 45 weist dadurch beispielhaft eine L-förmige Ausgestaltung auf und schließt sich in Längsrichtung an eine längsseitig angeordnete erste Öffnung 60 der ersten Halbschale 40 an. Die dritte Halbschale 50 ist an der ersten Halbschale 40 befestigt und erstreckt sich entlang einer dritten Erstreckungslinie 70, die beispielhaft parallel zur y-Achse erstreckt und somit geneigt zu der ersten Erstreckungslinie 55 verläuft.

Die ersten bis dritten Erstreckungslinien 55, 65, 70 sind beispielhaft gemeinsam in einer Ebene 71, die beispielsweise als xy-Ebene ausgebildet ist, angeordnet. Die Ebene 71 ist plan ausgebildet.

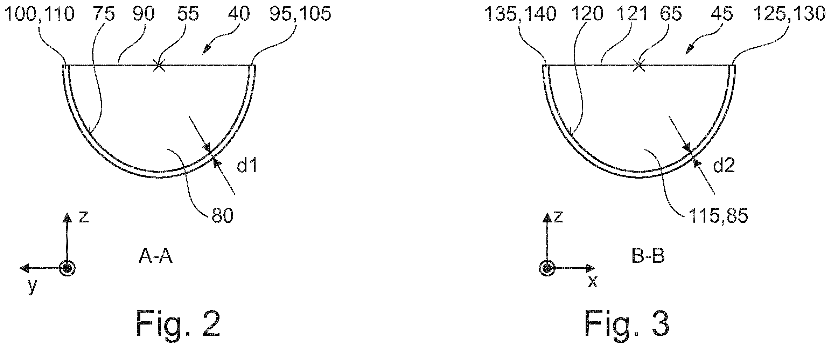

Figur 2 zeigt eine Schnittansicht entlang einer in Figur 1 gezeigten Schnittebene A-A durch die Form 10.

In Figur 2 wird auf die Darstellung des Kabelbaums 15 verzichtet.

Die erste Halbschale 40 ist dünnwandig ausgebildet. Dabei wird unter dünnwandig verstanden, dass eine erste Materialstärke d1 ca. 1,5 mm bis 4 mm, insbesondere, 1,8 mm bis einschließlich 3,2 mm, aufweist. Von besonderem Vorteil ist dabei, wenn die erste Halbschale 40 wenigstens einen der folgenden Werkstoffe aufweist: Polyethylen, Polypropylen, Polyvinylchlorid, Teflon. Die erste Halbschale 40 erstreckt sich dabei teilkreisförmig, insbesondere halbringförmig, um die erste Erstreckungslinie 55 auf einer Kreisbahn. Die erste Halbschale 40 weist eine erste Innenseite 75 auf. Die erste Innenseite 75 ist vorzugsweise unterbrechungsfrei auf der Kreisbahn um die erste Erstreckungslinie 55 ausgeformt. Die erste Innenseite 75 begrenzt einen ersten Formraumabschnitt 80 eines Formraums 85 der Form 10. Der erste Formraumabschnitt 80 wird dabei sowohl in Figur 2 nach unten hin als auch in Querrichtung (y-Richtung) durch die erste Innenseite 75 begrenzt.

Oberseitig auf einer der ersten Innenseite 75 abgewandten Seite weist die erste Halbschale 40 eine erste Einlegeöffnung 90 auf. An der ersten Einlegeöffnung 90 ist die erste Halbschale 40 offen ausgebildet. Die erste Einlegeöffnung 90 mündet in dem unterhalb der ersten Einlegeöffnung 90 angeordnetem ersten Formraumabschnitt Seitlich schließt sich an die erste Einlegeöffnung 90 jeweils ein oberes Ende 95, 100 der ersten Halbschale 40 an. Dabei kann ein erstes oberes Ende 95, das in Querrichtung gegenüberliegend zu einem zweiten oberen Ende 100 der ersten Halbschale 40 angeordnet ist, gemeinsam mit dem zweiten oberen Ende 100 in der Ebene 71 angeordnet sein. Ferner sind somit das erste obere Ende 95 und das zweite obere Ende 100 gemeinsam mit der ersten Erstreckungslinie 55 in der Ebene 71 angeordnet.

An dem ersten oberen Ende 95 weist die erste Halbschale 40 eine erste Trennfläche 105 und an dem zweiten oberen Ende 100 weist die erste Halbschale 40 eine zweite Trennfläche 110 auf. Die erste Trennfläche 105 und/oder die zweite Trennfläche 110 sind vorzugsweise unbearbeitet und weisen eine Struktur auf.

Figur 3 zeigt eine Schnittansicht entlang einer in Figur 1 gezeigten Schnittebene B-B durch die Form 10.

Die zweite Halbschale 45 ist im Wesentlichen im Querschnitt identisch zu der in Figur 2 gezeigten ersten Halbschale 40 ausgebildet. Die zweite Halbschale 45 kann aber auch unterschiedlich zu der in Figur 2 gezeigten ersten Halbschale 40 ausgebildet sein. Die zweite Halbschale 45 begrenzt einen zweiten Formraumabschnitt 115 des Formraums 85. Dabei schließt sich der zweite Formraumabschnitt 115 (siehe Figur 1) direkt anschließend beispielsweise in Längsrichtung an den ersten Formraumabschnitt 80 der ersten Halbschale 40 an. Gemeinsam begrenzen somit der erste Formraumabschnitt 80 und der zweite Formraumabschnitt 115 den Formraum 85 der Form 10. Mittels des Formraums 85 wird der in Figur 1 gezeigte Kabelbaum 15 hergestellt.

Die zweite Halbschale 45 weist eine zweite Innenseite 120 auf. Die zweite Innenseite 120 begrenzt sowohl in z-Richtung nach unten hin als auch seitlich den zweiten Formraumabschnitt 115. Dabei verläuft die zweite Innenseite 120 vorzugsweise auf einer Kreisbahn um die zweite Erstreckungslinie 65. Von besonderem Vorteil ist, wenn sich die zweite Halbschale 45 im in Figur 3 gezeigten Querschnitt teilringförmig, insbesondere halbringförmig, um die zweite Erstreckungslinie 65 erstreckt. In z-Richtung gegenüberliegend der ersten Innenseite 120 weist die zweite Halbschale 45 eine zweite Einlegeöffnung 121 auf, über die oberseitig der zweite Formraumabschnitt 115 zugänglich ist.

Die zweite Halbschale 45 weist an einem dritten oberen Ende 125 eine dritte Trennfläche 130 und gegenüberliegend zum dritten oberen Ende 125 ein viertes oberes Ende 135 auf. An dem vierten oberen Ende 135 weist die zweite Halbschale 45 eine vierte Trennfläche 140 auf. Zwischen dem dritten oberen Ende 125 und dem vierten oberen Ende 135 ist die zweite Einlegeöffnung 121 angeordnet und grenzt jeweils an die dritte und vierte Trennfläche 130, 135 an. In Längsrichtung kann sich die erste Einlegeöffnung 90 an die zweite Einlegeöffnung 121 anschließen.

Die zweite Halbschale 45 kann einstückig und materialeinheitlich mit der ersten Halbschale 40 ausgebildet sein. Auch können die erste Halbschale 40 und die zweite Halbschale 45 an der ersten Öffnung 60 aneinander montiert und vorzugsweise mechanisch, beispielsweise stoffschlüssig, miteinander verbunden sein. An der ersten Öffnung 60 mündet dabei der erste Formraumabschnitt 80 in dem zweiten Formraumabschnitt 115.

Von besonderem Vorteil ist, wenn die zweite Halbschale 45 wenigstens einen der folgenden dritten Werkstoffe aufweist: Polyethylen, Polypropylen, Polyvinylchlorid. Der dritte Werkstoff der zweiten Halbschale 45 kann dabei identisch zu dem zweiten Werkstoff der ersten Halbschale 40 gewählt sein.

Ebenso ist die zweite Halbschale 45 dünnwandig ausgebildet. Die zweite Halbschale 45 kann ferner eine zweite Materialstärke d2 aufweisen, wobei die zweite Materialstärke d2 von einschließlich 1,5 mm bis einschließlich 4 mm, insbesondere von einschließlich 1,8 mm bis einschließlich 3,2 mm beträgt. Die zweite Materialstärke d2 kann dabei identisch zu der ersten Materialstärke d1 sein. Auch kann die zweite Materialstärke d2 unterschiedlich zu der ersten Materialstärke d1 sein.

Insbesondere ist möglich, dass die erste Halbschale 40 und die zweite Halbschale 45 kaltverformt sind, um die in Figur 1 dargestellte L-förmige Ausgestaltung der ersten Halbschale 40 zusammen mit der zweiten Halbschale 45 herzustellen.

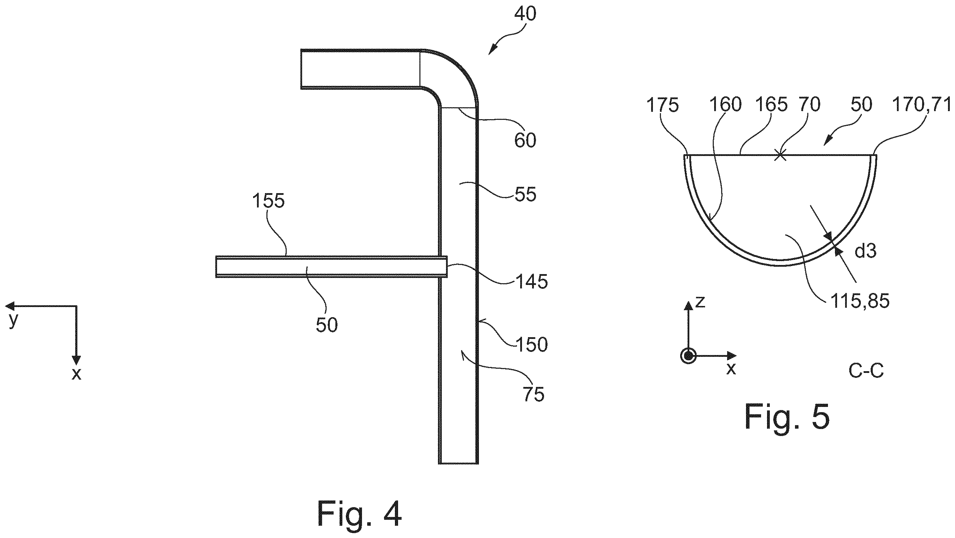

Figur 4 zeigt eine Draufsicht auf die in Figur 1 gezeigte Form 10.

Die erste Halbschale 40 weist neben der ersten Öffnung 60 beispielhaft eine zweite Öffnung 145 auf. Die zweite Öffnung 145 ist in Längsrichtung versetzt beispielhaft zu der ersten Öffnung 60 angeordnet. Die zweite Öffnung 145 kann dabei als halbkreisförmige Bohrung in der ersten Halbschale 40 ausgebildet sein. Die zweite Öffnung 145 ist dabei als Durchgangsöffnung ausgebildet und verbindet die erste Innenseite 75 mit einer Außenseite 150 beispielsweise der ersten Halbschale 40. An der zweiten Öffnung 145 ist die dritte Halbschale 50 befestigt. Dabei mündet ein dritter Formraumabschnitt 155 des Formraums 85, der durch die dritte Halbschale 50 seitlich und unterseitig begrenzt wird, in dem ersten Formraumabschnitt 80 der ersten Halbschale 40. An der zweiten Öffnung 145 kann die dritte Halbschale 50 mechanisch, beispielsweise stoffschlüssig, befestigt sein.

Figur 5 zeigt eine Schnittansicht entlang einer in Figur 4 gezeigten Schnittebene C-C durch die dritte Halbschale 50.

Die dritte Halbschale 50 ist im Wesentlichen identisch zur ersten und zweiten Halbschale 40, 45 ausgebildet, ist jedoch in der Ausführungsform mit kleinerem Profil ausgebildet als die erste und/oder zweite Halbschale 40, 45. Dabei weist die dritte Halbschale 50 eine dritte Innenseite 160 auf, wobei die dritte Innenseite 160 sowohl seitlich als auch nach unten hin den dritten Formraumabschnitt 155 begrenzt. Nach oben ist die dritte Halbschale 50 offen ausgebildet und weist die dritte Einlegeöffnung 165 auf. Die dritte Halbschale 50 ist bogenförmig, insbesondere teilringförmig, um die dritte Erstreckungslinie 70 verlaufend ausgebildet.

Die dritte Halbschale 50 weist ferner eine fünfte Trennfläche 170 auf. Die fünfte Trennfläche 170 schließt sich an die dritte Einlegeöffnung 165 an. Gegenüberliegend zur fünften Trennfläche 170 weist die dritte Halbschale 50 eine sechste Trennfläche 175 auf, wobei die fünfte Trennfläche 170 und die sechste Trennfläche 175 zusammen mit der dritten Erstreckungslinie 70 in der gemeinsamen Ebene 71 ebenso gemeinsam mit der ersten bis vierten Trennfläche 105, 110, 130, 140 angeordnet sind.

Die dritte Halbschale 50 ist ebenso wie die erste und zweite Halbschale 40, 45 dünnwandig ausgebildet. Dabei weist die dritte Halbschale 50 eine dritte Materialstärke d3 auf, wobei die dritte Materialstärke d3 geringer ist als die erste und die zweite Materialstärke d1, d2. Dabei kann die dritte Materialstärke d3 ebenso wie die erste und zweite Materialstärke d1, d2 1,5 mm bis 4 mm, insbesondere einschließlich 1,8 mm bis einschließlich 3,2 mm, betragen. Von besonderem Vorteil ist, wenn die dritte Halbschale 50 wenigstens einen der folgenden vierten Werkstoff aufweist: Polyethylen, Polypropylen, Polyvinylchlorid, Teflon. Von besonderem Vorteil ist, wenn der vierte Werkstoff identisch zu dem zweiten und dritten Werkstoff der ersten und/oder zweiten Halbschale 40, 45 gewählt ist, sodass beispielhaft besonders gut die dritte Halbschale 50 an der zweiten Öffnung 145 mittels einer Schweißverbindung mit der ersten Halbschale 40 verschweißt sein kann. Insbesondere kann dadurch, wenn der zweite Werkstoff und der vierte Werkstoff identisch gewählt sind, auf zusätzliches Füllmaterial zum Verschweißen der dritten Halbschale 50 mit der ersten Halbschale 40 verzichtet werden.

In der Ausführungsform erstreckt sich beispielhaft die dritte Halbschale 50 geradlinig entlang der dritten Erstreckungslinie 70. Selbstverständlich wäre auch denkbar, dass beispielsweise die dritte Halbschale 50 kaltverformt ist und bogenförmig ausgebildet ist.

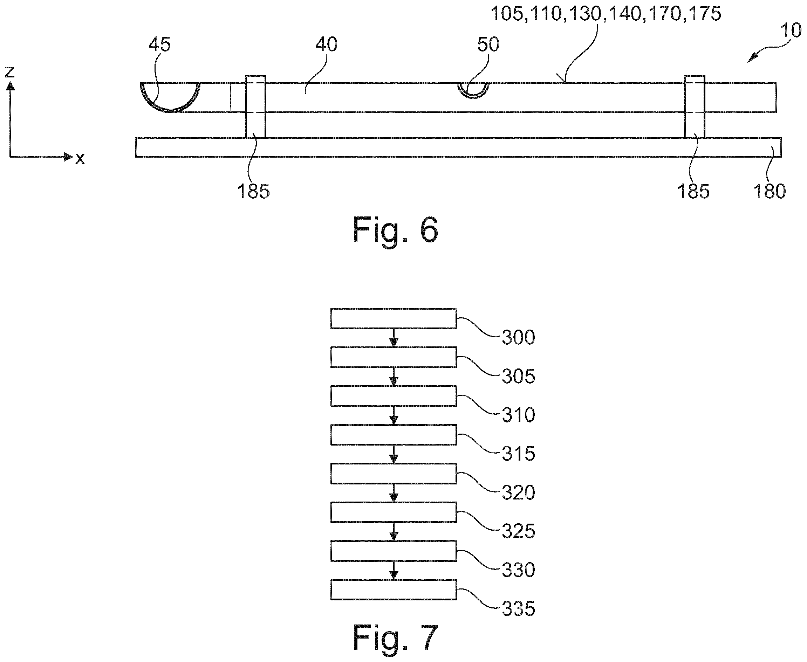

Figur 6 zeigt eine Seitenansicht auf die in Figur 1 gezeigte Form 10.

Die Form 10 weist zusätzlich zu der oben gezeigten Halbschale 40, 45, 50 ein Formbrett 180 auf, wobei das Formbrett 180 beispielsweise plattenförmig ausgebildet ist und unterhalb der ersten bis dritten Halbschale 40, 45, 50 angeordnet ist.

Das Formbrett 180 ist beispielsweise plattenförmig ausgebildet und erstreckt sich in der Ausführungsform beispielhaft in einer xy-Ebene. Das Formbrett 180 dient zur Befestigung der einzelnen Halbschalen 40, 45, 50, sodass diese aufgrund ihrer halbrunden Ausgestaltung jeweils zugstabil fixiert sind. Dazu kann zwischen dem Formbrett 180 und den Halbschalen 40, 45, 50 jeweils ein Befestigungsmittel 185 angeordnet sein, das beispielsweise clipartig ausgebildet ist und umfangsseitig die Außenseite 150 eine der Halbschalen 40, 45, 50 umgreift. Dabei kann das Befestigungsmittel 185 ein Rastmittel aufweisen, das jeweils oberseitig an der Trennfläche 105, 110, 130, 140, 170, 175 die jeweils zugeordnete Halbschale 40, 45, 50 hintergreift und die Halbschale 40, 45, 50 an dem Formbrett 180 befestigt. Insbesondere ist denkbar, dass Befestigungsmittel 185 zumindest einen Clipabschnitt aufweist, der die Halbschale 40, 45, 50 an dem Formbrett 180 befestigt.

Um den Kabelbaum 15 mit der in Figuren 1 bis 6 gezeigten Form 10 herzustellen, wird in einem ersten Produktionsschritt die in den Figuren 1 bis 6 gezeigte Form 10 bereitgestellt.

In einem zweiten Produktionsschritt kann ein Routerclip (in den Figuren 1 bis 6 nicht dargestellt), insbesondere eine Mehrzahl von Routerclips, in den Formraum 85 eingesetzt werden.

In einem auf den zweiten Produktionsschritt folgenden dritten Produktionsschritt werden die elektrischen Kabel 30, 35 des Kabelbündels 20 über die jeweilige erste bis dritte Einlegeöffnung 90, 121, 165 in den Formraum 85 und den Routerclip eingelegt. Dabei kann der Routerclip die eingelegten elektrischen Kabel 30, 35 des Kabelbündels 20 in dem Formraum 85 fixieren, sodass ein ungewolltes Austreten der Kabel 30, 35 aus dem Formraum 85 vermieden werden kann. Dadurch wird ein sicheres Einlegen der Kabel 30, 35 des Kabelbündels 20 in den nach oben offenen Formraum 85 sichergestellt. Die Innenseiten 75, 120, 160 verhindern ein Durchhängen der elektrischen Kabel 30, 35.

In einem auf den dritten Produktionsschritt folgenden vierten Produktionsschritt wird der flüssige erste Werkstoff und/oder ein flüssiges erstes Vorprodukt, oder ein Gemisch aus einem ersten Vorprodukt und einem zweiten Vorprodukt über die jeweilige Einlegeöffnung 90, 121, 165 in den Formraum 85 eingebracht. Insbesondere wird beispielsweise der flüssige erste Werkstoff und/oder das flüssige erste Vorprodukt, oder das Gemisch oberseitig auf das eingelegte Kabelbündel 20 und gegebenenfalls den vorhandenen Routerclip aufgebracht.

Der flüssige erste Werkstoff und/oder das flüssige erste Vorprodukt, oder das Gemisch ist vorzugsweise dünnflüssig. Eine Aushärtezeit des flüssigen ersten Werkstoffs und/oder des flüssigen ersten Vorprodukts, oder des Gemischs ist derart gewählt, dass hinreichend Zeit vorhanden ist, dass der flüssige erste Werkstoff und/oder das flüssige erste Vorprodukt, oder das Gemisch in den Formraum 85 absichern kann und dabei die Kabel 30, 35 vorzugsweise vollständig umschließen kann.

Von besonderem Vorteil ist beispielsweise, wenn der flüssige erste Werkstoff und/oder das flüssige erste Vorprodukt, oder das Gemisch mechanisch und/oder chemisch aufgeschäumt wird. Der flüssige erste Werkstoff und/oder das flüssige erste Vorprodukt, oder das Gemisch umschließt, insbesondere beim Aufschäumen, das Kabelbündel 20 und die elektrischen Kabel 30, 35. Dabei können zusätzlich auch die gegebenenfalls in den Formraum 85 eingesetzten Routerclips vorzugsweise umschlossen werden. Dadurch sind die elektrischen Kabel 30, 35 und gegebenenfalls die Routerclips zumindest teilweise, vorzugsweise vollständig, in dem flüssigen ersten Werkstoff und/oder dem flüssigen ersten Vorprodukt, oder dem Gemisch eingebettet.

Beim oder nach dem Aufschäumen wird der flüssige erste Werkstoff und/oder das flüssige erste Vorprodukt, oder das Gemisch zu dem Schaumwerkstoff der Ummantelung 25 ausgehärtet. Dabei bildet der flüssige erste Werkstoff und/oder das flüssige erste Vorprodukt, oder das Gemisch eine stoffschlüssige Verbindung sowohl mit dem Kabelbündel 20, als auch, sofern vorhanden, mit den jeweiligen Routerclips, aus. Beim Aushärten und Aufschäumen kann ein Teil des Schaumwerkstoffs oberseitig über die Trennfläche 105, 110, 130, 140, 170, 175 ragend über die jeweilige Einlegeöffnung 90, 121, 165 austreten.

In einem auf den vierten Produktionsschritt folgenden fünften Produktionsschritt verbleibt der Kabelbaum 15 zumindest zum teilweisen Aushärten in dem Formraum 85 und ruht dabei vorzugsweise.

In einem auf den fünften Produktionsschritt folgenden sechsten Produktionsschritt wird der Kabelbaum 15 aus dem Formraum 85 dadurch entnommen, dass in z-Richtung nach oben über die Einlegeöffnung 90, 121, 165 hin der Kabelbaum 15 herausgezogen wird.

Der Kabelbaum 15 kann durch die halbringförmige Ausgestaltung und die verrundete Innenseite 75, 120, 160 der jeweiligen Halbschale 40, 45, 50 besonders gut nach oben hin aus dem Formraum 85 entnommen werden. Insbesondere wird durch die halbringförmige Ausgestaltung der Halbschale 40, 45, 50 und damit einhergehend der halbzylinderförmigen Ausgestaltung der jeweiligen Innenseite 75, 120, 160 ein Hinterschnitt der Ummantelung 25 an der Innenseite 75, 120, 160 vermieden.

Dadurch dass die Trennflächen 105, 110, 130, 140, 170, 175 jeweils in der gemeinsamen Ebene 71 angeordnet sind und dadurch, wie in Figur 6 ersichtlich, die dritte Halbschale 50 mit ihrem unteren Ende nach oben hin gegenüber der ersten und zweiten Halbschale 40, 45 versetzt angeordnet ist, wird sichergestellt, dass beim Befüllen des Formraums 85 mit dem flüssigen ersten Werkstoff und/oder dem flüssigen ersten Vorprodukt, oder dem Gemisch ein Überlaufen vermieden wird. Insbesondere wird ein Ablaufen seitlich über die fünfte und sechste Trennfläche 170, 175 an der dritten Halbschale 50 vermieden.

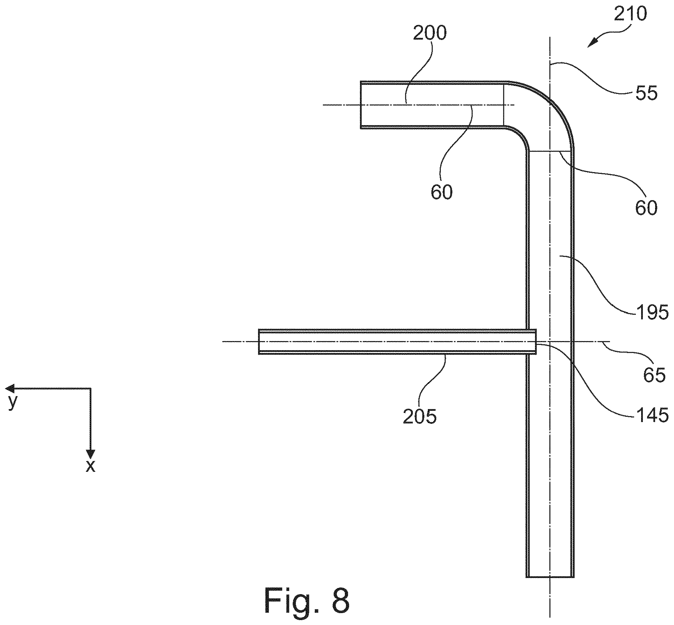

Figur 7 zeigt ein Ablaufdiagramm eines Verfahrens zur Herstellung der in den Figuren 1 bis 6 gezeigten Form 10. Figur 8 zeigt eine schematische Darstellung einer Rohform 210 nach dem vierten Verfahrensschritt 320.

Dabei gibt die Abfolge der im folgenden Verfahrensschritte eine bevorzugte Reihenfolge wieder. Selbstverständlich ist auch eine andere Reihenfolge möglich.

In einem ersten Verfahrensschritt 305 wird aus beispielsweise dem flüssigen zweiten Werkstoff im Rahmen eines Blasformverfahrens ein erster Hohlkörper 195 in Schlauchform in eine gekühlte Extrudionsionsform extrudiert. Der schlauchförmige zweite Werkstoff wird beispielsweise mittels Druckluft aufgeblasen und an eine Kontur des Extrudionswerkzeugs gepresst. Nach einem Abkühlen wird das Extrudionsionswerkzeug geöffnet und der erste Hohlkörper 195 entnommen.

Der erste Verfahrensschritt 305 wird zur Herstellung eines zweiten Hohlkörpers 200 und eines dritten Hohlkörpers 205 ebenso angewandt. Abweichend dazu wird im ersten Verfahrensschritt 305 zur Herstellung des zweiten Hohlkörpers 200 der dritte Werkstoff und zur Herstellung des dritten Hohlkörpers 205 der dritte Werkstoff verwendet.

Der erste und/oder zweite und/oder dritte Hohlkörper 195, 200, 205 erstrecken sich jeweils nach dem ersten Verfahrensschritt 305 geradlinig entlang der jeweiligen Erstreckungslinie 55, 65, 70. Auch wäre möglich, dass nach dem ersten Verfahrensschritt 305 zumindest einer der Hohlkörper 195, 200, 205 gekrümmt ausgebildet ist.

In einem zweiten Verfahrensschritt 310, der nach dem ersten Verfahrensschritt 305 durchgeführt wird, wird beispielsweise in den ersten Hohlkörper 195 seitlich die zweite Öffnung 145 eingebracht, beispielsweise gebohrt. Auf den zweiten Verfahrensschritt 310 kann aber auch verzichtet werden oder, sollten mehrere Abzweigungen notwendig sein, mehrere zweite Öffnungen 145 eingebracht bzw. gebohrt werden.

In einem dritten Verfahrensschritt 315, der vorzugsweise nach dem zweiten Verfahrensschritt 310 durchgeführt wird, wird das der zweite Hohlkörper 200 beispielsweise kaltverformt. Dabei wird beispielhaft der zweite Hohlkörper 200, der sich nach dem ersten Verfahrensschritt 305 im Wesentlichen geradlinig entlang der 65 erstreckt, beispielhaft um 90° gebogen. Selbstverständlich wäre auch möglich, dass der zweite Hohlkörper 200 um einen anderen Winkel gebogen wird oder andersartig verformt wird. Selbstverständlich wäre auch möglich, dass der zweite Hohlkörper 200 andersartig als kaltverformt, beispielsweise warmverformt oder mechanisch bearbeitet wird.

Selbstverständlich ist auch möglich, dass der erste und dritte Verfahrensschritt 305, 315 gemeinsam durchgeführt werden und während der Herstellung des Hohlkörpers 195, 200, 205 der Hohlkörper 195, 200, 205 verformt wird.

Die jeweilige Erstreckungslinie 55, 65, 70 des Hohlkörpers 195, 200, 205 bildet dabei eine Mittelachse aus, um die sich jeweils der Hohlkörper 195, 200, 205 herum erstreckt. Insbesondere ist dabei beispielsweise der erste Hohlkörper 195 zylinderförmig um die erste Erstreckungslinie 55 ausgebildet. Dabei ist die erste Öffnung 60 an einem der beiden Längsenden des ersten Hohlkörpers 195 angeordnet.

In einem auf den dritten Verfahrensschritt 315 folgenden vierten Verfahrensschritt 320 wird an der ersten Öffnung 60 der erste Hohlkörper 195 mit dem zweiten Hohlkörper 200 verbunden. Das Verbinden kann beispielsweise dadurch erfolgen, dass der erste Hohlkörper 195 mit dem zweiten Hohlkörper 200 an der ersten Öffnung 60 beispielsweise stoffschlüssig, insbesondere verschweißt, beispielsweise Ultraschall-verschweißt, wird.

Ferner kann in dem vierten Verfahrensschritt 320 der dritte Hohlkörper 205 an der zweiten Öffnung 145 befestigt werden. Dies kann beispielsweise dadurch erfolgen, dass der dritte Hohlkörper 20 mit dem ersten Hohlkörper 195 beispielsweise stoffschlüssig, insbesondere verschweißt, insbesondere Ultraschall-verschweißt, wird.

Nachdem die Hohlkörper 195, 200, 205 miteinander verbunden, beispielsweise miteinander verschweißt, sind, bildet die Anordnung aus den miteinander verbundenen Hohlkörpern 195, 200, 205 die Rohform 210 aus (vgl. Figur 8)

In einem auf den vierten Verfahrensschritt 320 folgenden fünften Verfahrensschritt 325 wird entlang der Erstreckungslinie 55, 65, 70 in der Ebene 71 die Rohform 210 aufgetrennt, insbesondere halbiert. Die Auftrennung der Rohform 210 in zwei Formen 10 kann beispielsweise mittels eines Heißdrahtschneidverfahrens oder beispielsweise eines Lasertrennverfahrens erfolgen. Dabei wird an dem Hohlkörper 195, 200, 205 beim Auftrennen der Rohform 210 in die Form 10 die Trennfläche 105, 110, 130, 140, 170, 175 ausgebildet.

Durch das Auftrennen der Rohform 210 in die Form 10 wird der erste Hohlkörper 195 in jeweils zwei erste Halbschalen 40, der zweite Hohlkörper 200 in jeweils zwei zweite Halbschalen 45 und der dritte Hohlkörper 205 in jeweils zwei dritte Halbschalen 50 aufgetrennt.

In einem auf den fünften Verfahrensschritt 325 folgenden sechsten Verfahrensschritt 330 werden mittels der Befestigungsmittel 185 die miteinander verbunden Halbschalen 40, 45, 50 mit dem Formbrett 180 verbunden, beispielsweise aufgeclipst, sodass die Form 10 hergestellt ist und mit dem oben beschriebenen Verfahren zur Herstellung des Kabelbaums 15 begonnen werden kann.

Die oben beschriebene Form 10 und das beschriebene Herstellungsverfahren zur Herstellung der Form 10 haben den Vorteil, dass auf eine aufwändige Herstellung der einzelnen Abschnitte der Form 10, wie sie aus dem Stand der Technik bekannt ist, insbesondere auf spanende Verfahren zur Herstellung des Formraums 85, verzichtet werden kann. Insbesondere können die im ersten Verfahrensschritt 305 hergestellten Hohlkörper 195, 200, 205 als Standard-Rohre kostengünstig hergestellt oder auf dem Markt kostengünstig eingekauft werden und genutzt werden, um im Rahmen des zweiten bis sechsten Verfahrensschritts 310 bis 330 die Form 10 herzustellen. Ferner können bereits frei verfügbare Befestigungsmittel 185 genutzt werden, um die Halbschalen 40, 45, 50 zu befestigen, sodass die Form 10 mit wenigen Verfahrensschritten 310 bis 330 und mit wenig Materialeinsatz herstellbar ist.

Die dünnwandige Ausgestaltung der Halbschalen 40, 45, 50 hat ferner den Vorteil, dass die Form 10 besonders leicht ist und besonders einfach transportiert werden kann. Des Weiteren ist von Vorteil, dass aus der im fünften Verfahrensschritt 325 hergestellten Rohform 210 jeweils zwei Formen 10 hergestellt werden, sodass zusätzlich die Herstellungskosten pro Form 10 weiter reduziert sind. Des Weiteren können die Hohlkörper 195, 200, 205 besonders leicht verformt, beispielsweise gebogen, beispielsweise kaltverformt, werden, sodass eine einfache Anpassung einer Geometrie der Form 10 ohne spezielle Werkzeuge realisiert werden kann. Auch können durch die seitliche Anordnung, beispielsweise des dritten Hohlkörpers 205 an dem ersten Hohlkörper 195 Gabelungen einfach hergestellt werden, sodass Aushalsungen an den Halbschalen 40, 45, 50 mittels einfach herzustellender Bohrung erzeugt werden können, was den Arbeitsaufwand zur Herstellung der Form 10 äußert geringhält. Ferner kann mit dem in Figur 7 beschriebenen Verfahren die Anzahl der Gleichteile besonders groß gehalten werden.

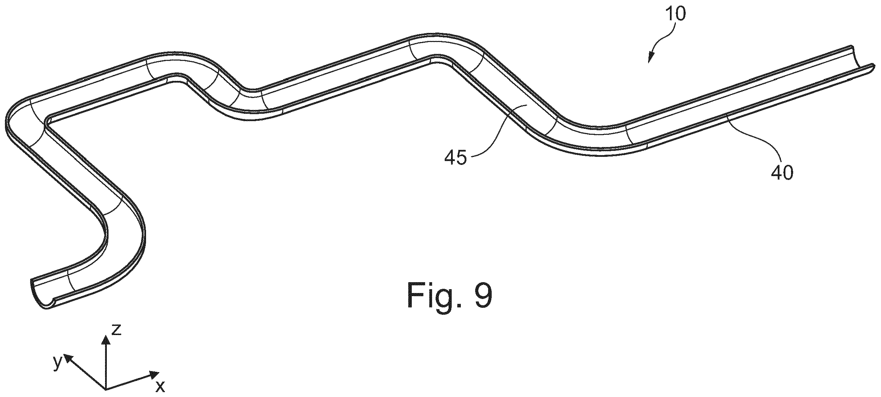

Figur 9 zeigt eine perspektivische Darstellung einer Form 10 gemäß einer zweiten Ausführungsform.

Die Form 10 ist im Wesentlichen identisch zu der in den Figuren 1 bis 6 gezeigten Form 10 ausgebildet. Im Folgenden wird ausschließlich auf die Unterschiede der in Figur 9 gezeigten Form 10 gegenüber der in den Figuren 1 bis 6 gezeigten Form 10 eingegangen.

In der zweiten Ausführungsform wird auf die dritte Halbschale 50 verzichtet. In einem Teilbereich der Form 10 weist die Form 10 die erste Halbschale 40 und die zweite Halbschale 45 auf. In der Ausführungsform sind die erste Halbschale 40 und die zweite Halbschale 45 beispielhaft einstückig und materialeinheitlich ausgebildet und beispielsweise aus dem zweiten Werkstoff hergestellt.

Das in Figur 7 beschriebene Herstellungsverfahren ist dahingehend adaptiert, dass auf die Verbindung der ersten Halbschale 40 mit der zweiten Halbschale 45 im fünften Verfahrensschritt 325 verzichtet wird.

Ferner weist die in Figur 9 gezeigte Form 10 weitere Biegungen auf, die wie in Figur 7 beschrieben mit weiteren dritten Verfahrensschritten 315 hergestellt werden können.

Es wird darauf hingewiesen, dass es in einer Weiterbildung des in Figur 6 beschriebenen Verfahrens selbstverständlich auch möglich ist, dass der fünfte Verfahrensschritt 325 nach dem ersten Verfahrensschritt 305 durchgeführt wird, und der Hohlkörper 195, 200, 205 jeweils entlang der Erstreckungslinie 55, 65, 70 aufgeteilt, insbesondere halbiert wird, bevor die Hohlkörper 195, 200, 205 miteinander verbunden werden. In der Weiterbildung werden dann jeweils die Halbschalen 40, 45, 50 jeweils im vierten Verfahrensschritt 320 miteinander verbunden.

Auch wäre denkbar, dass im Rahmen der Weiterbildung die zweite Öffnung 145 in die erste Halbschale 40 eingebracht, insbesondere gebohrt wird (vgl. vierter Verfahrensschritt 320).

### Bezugszeichenliste

- 10: Form
- 15: Kabelbaum
- 20: Kabelbündel
- 25: Ummantelung
- 30: erstes elektrisches Kabel
- 35: zweites elektrisches Kabel
- 40: erste Halbschale
- 45: zweite Halbschale
- 50: dritte Halbschale
- 55: erste Erstreckungslinie
- 60: erste Öffnung
- 65: zweite Erstreckungslinie
- 70: dritte Erstreckungslinie
- 71: Ebene
- 75: erste Innenseite
- 80: erster Formraumabschnitt
- 85: Formraum
- 90: erste Einlegeöffnung
- 95: erstes obere Ende
- 100: zweites oberes Ende
- 105: erste Trennfläche
- 110: zweite Trennfläche
- 115: zweiter Formraumabschnitt
- 120: zweite Innenseite
- 121: zweite Einlegeöffnung
- 125: drittes oberes Ende
- 130: dritte Trennfläche
- 135: viertes oberes Ende
- 140: vierte Trennfläche
- 145: zweite Öffnung
- 150: Außenseite
- 155: dritter Formraumabschnitt
- 160: dritte Innenseite
- 165: dritte Einlegeöffnung
- 170: fünfte Trennfläche
- 175: sechste Trennfläche
- 180: Formbrett
- 185: Befestigungsmittel
- 195: erster Hohlkörper
- 200: zweiter Hohlkörper
- 205: dritter Hohlkörper
- 210: Rohform

- 305: erster Verfahrensschritt
- 310: zweiter Verfahrensschritt
- 315: dritter Verfahrensschritt
- 320: vierter Verfahrensschritt
- 325: fünfter Verfahrensschritt
- 330: sechster Verfahrensschritt
- 335: siebter Verfahrensschritt

- d1: erste Materialstärke
- d2: zweite Materialstärke
- d3: dritte Materialstärke

## Patentansprüche

1. Verfahren zur Herstellung einer Form (10) zur Herstellung eines Kabelbaums (15),
- wobei ein sich entlang einer ersten Erstreckungslinie (55) erstreckender erster Hohlkörper (195) aus einem dünnwandigen zweiten Werkstoff bereitgestellt wird,
- wobei der erste Hohlkörper (195) entlang der ersten Erstreckungslinie (55) in eine erste Halbschale (40) aufgeteilt, insbesondere halbiert, wird,
- wobei die erste Halbschale (40) innenseitig einen ersten Formraumabschnitt (80) eines Formraums (85) der Form (10) zur Herstellung des Kabelbaums (15) begrenzt.

2. Verfahren nach Anspruch 1,
- wobei ein sich entlang einer zweiten Erstreckungslinie (65) erstreckender zweiter Hohlkörper (200) aus einem dritten Werkstoff bereitgestellt wird,
- wobei der zweite Hohlkörper (200) entlang der zweiten Erstreckungslinie (65) in eine zweite Halbschale (45) aufgeteilt, insbesondere halbiert, wird,
- wobei die zweite Halbschale (45) innenseitig einen zweiten Formraumabschnitt (115) des Formraums (85) begrenzt,
- wobei die erste Halbschale (40) direkt oder indirekt mit der zweiten Halbschale (45) zu der Form (10) derart verbunden wird, dass der erste Formraumabschnitt (80) mit dem zweiten Formraumabschnitt (115) verbunden ist.

3. Verfahren nach Anspruch 2,
- wobei der erste Hohlkörper (195) mit dem zweiten Hohlkörper (200), insbesondere stoffschlüssig, zu einer Rohform (210) verbunden wird,
- wobei die Rohform (210) zeitlich nach Verbinden des ersten Hohlkörpers (195) mit dem zweiten Hohlkörper (200) entlang der ersten und zweiten Erstreckungslinie (55, 65) zu der Form (10) zerteilt, insbesondere halbiert, wird.

4. Verfahren nach Anspruch 2 oder 3,
- wobei zeitlich vor Verbinden des ersten Hohlkörpers (195) mit dem zweiten Hohlkörper (195) der erste Hohlkörper (195) in die erste Halbschale (40) und der zweite Hohlkörper (200) in die zweite Halbschale (45) zerteilt, insbesondere halbiert, wird.

5. Verfahren nach einem der vorhergehenden Ansprüche,
- wobei die erste Halbschale (40) und/oder die zweite Halbschale (45) mittels eines Befestigungsmittels (185) formschlüssig und/oder stoffschlüssig an einem zumindest abschnittsweise plattenförmigen Formbrett (180) der Form (10) befestigt wird.

6. Verfahren nach einem der vorhergehenden Ansprüche,
- wobei der erste Hohlkörper (195) und/oder die erste Halbschale (40) verformt, insbesondere gebogen, insbesondere kaltverformt, wird.

7. Verfahren nach einem der Ansprüche 2 bis 6,
- wobei in die erste Halbschale (40) eine Öffnung (145) eingebracht wird, insbesondere gebohrt wird,
- wobei an der Öffnung (145) die zweite Halbschale (45) angeordnet wird und mit dem zweiten Werkstoff verbunden wird, insbesondere stoffschlüssig, verbunden wird.

8. Verfahren nach einem der vorhergehenden Ansprüche,
- wobei der erste Hohlkörper (195) aus dem zweiten Werkstoff, insbesondere mittels eines Blasformverfahrens, extrudiert wird.

9. Form (10) zur Herstellung eines Kabelbaums (15), vorzugsweise hergestellt mittels eines Verfahrens nach einem der vorhergehenden Ansprüche,
- wobei die Form (10) eine erste Halbschale (40) aufweist,
- wobei die erste Halbschale (40) dünnwandig ausgebildet ist,
- wobei die erste Halbschale (40) mit einer ersten Innenseite (75) einen ersten Formraumabschnitt (80) eines Formraums (85) zur Herstellung des Kabelbaums (15) begrenzt.

10. Form nach Anspruch 9,
- aufweisend eine zweite dünnwandig ausgebildete Halbschale (45),
- wobei die erste Halbschale (40) eine Öffnung (60, 145) aufweist,
- wobei die zweite Halbschale (45) mit einer zweiten Innenseite (120) einen zweiten Formraumabschnitt (115) des Formraums (85) begrenzt,
- wobei an der Öffnung (60, 145) die erste Halbschale (40) und die zweite Halbschale (45) derart miteinander verbunden sind, dass der erste Formraumabschnitt (80) und der zweite Formraumabschnitt (115) ineinander münden und den Formraum (85) ausbilden.

11. Form (10) nach Anspruch 9 oder 10,
- wobei die erste Halbschale (40) und/oder die zweite Halbschale (45) mittels eines Befestigungsmittels (185) mit einem Formbrett (180) der Form (10) verbunden ist.

12. Form (10) nach einem der Ansprüche 9 bis 11,
- wobei die erste Halbschale (40) und/oder die zweite Halbschale (45) einen teilringförmigen, insbesondere einen halbringförmigen, oder einen U-förmigen Querschnitt aufweist.

13. Form (10) nach einem der Ansprüche 9 bis 12,
- wobei die erste Halbschale (40) kaltverformt ist.

14. Form (10) nach einem der Ansprüche 9 bis 13,
- wobei die erste Halbschale (40) wenigstens eine erste Trennfläche (105) und eine erste Einlegeöffnung (90) aufweist,
- wobei die erste Einlegeöffnung (90) in dem ersten Formraumabschnitt (115) mündet und die erste Trennfläche (105) an die erste Einlegeöffnung (90) angrenzt,
- wobei die zweite Halbschale (45) wenigstens eine dritte Trennfläche (130) und eine zweite Einlegeöffnung (121) aufweist,
- wobei die zweite Einlegeöffnung (121) in den zweiten Formraumabschnitt (80) mündet und die dritte Trennfläche (130) an die zweite Einlegeöffnung (121) angrenzt,
- wobei die erste Trennfläche (105) und die dritte Trennfläche (130) in einer gemeinsamen Ebene (71) angeordnet sind.

15. Form (10) nach einem der Ansprüche 9 bis 14,
- wobei die erste Halbschale (40) wenigstens einen der folgenden zweiten Werkstoffe aufweist: Polyethylen, Polypropylen, Polyvinylchlorid, Teflon,
- und/oder
- wobei die erste Halbschale (40) und/oder die zweite Halbschale (45) eine Materialstärke (d1, d2) von einschließlich 1,5 mm bis einschließlich 4 mm, insbesondere von einschließlich 1,8 mm bis einschließlich 3,2 mm aufweist,
- und/oder
- wobei die erste Halbschale (40) und die zweite Halbschale (45) einstückig und materialeinheitlich ausgebildet sind.
